# EUROPEAN PATENT SPECIFICATION

(11) **EP 0 975 881 B1**
(45) Date of publication and mention of the grant of the patent: **25.02.2004**
(21) Application number: 98912830.1
(22) Date of filing: 14.04.1998
(51) Int. Cl.: F16D 11/10

(54) **TOOTHCOUPLING WITH FACE GEAR TOOTHING**
ZAHNKUPPLUNG MIT STIRNVERZAHNUNG
ENGRENAGE PRESENTANT UNE DENTURE DE ROUE DE CHAMP

(30) Priority: 14.04.1997 NL 1005805
(43) Date of publication of application: 02.02.2000
(73) Proprietor: Crown Gear Holding B.V., 7544 RG Enschede (NL)
(72) Inventor: BASSTEIN, Augustinus, Franciscus, Herman, 4841 CH Prinsenbeek (NL)
(74) Representative: Iemenschot, Johannes Andreas, Ir.
(86) International application number: PCT/NL1998/000211
(87) International publication number: WO 1998/046898

(56) References cited:
- EP-A- 0 093 694
- GB-A- 988 564
- US-A- 2 429 284
- US-A- 2 950 797
- US-A- 3 184 988
- US-A- 4 060 007
- US-A- 4 997 408

## Description

The invention relates to a tooth coupling in accordance with the preamble of claim 1.

Tooth couplings of this kind are known, inter alia, from US-A-3.184.988, in which figure 13 shows a tooth coupling with coupling halves, which halves are provided with a face gear toothing made by using a hob.

A disadvantage of the known tooth coupling is that the inside diameter the tooth tips of the coupling halves may bear on the flanks of the root fillet, thereby creating high surface presses and possible damage.

The object of the invention is to improve this situation, and to this end the coupling halves are designed in accordance with the characterising part of claim 1.

The result is that the tip of one coupling half does not come into contact with the root of the other coupling half, with the result that the contact between the coupling halves occurs between the accurately machined toothing flanks and with the result that the alignment of the coupling halves is independent of manufacturing errors in the tip height and deviations in the root fillet.

According to a further improvement, the tooth coupling is designed in accordance with claim 2.

As a result, the radius of curvature with which the two coupling halves bear against one another is increased so increasing the load-bearing capacity.

In an embodiment of the tooth coupling of claim 3 the tooth coupling is designed in accordance with claim 4. In this way the geometry is changed in an easy way and as a result, the width curvature is formed simultaneously on both flanks in a simple manner.

In an embodiment of the tooth coupling of claim 5 the tooth coupling is designed in accordance with claim 6. This makes it easy to produce the coupling half with a rotating hob.

The invention also relates to a method for making the toothing in a coupling half of a tooth coupling by machining the coupling half with a suitable hob in a gear-cutting machine.

A method of this kind is known from US-A-3.184.988 the hob generally being moved along the work piece in the tooth direction, which is perpendicular to the rotation axis of the coupling half.

According to the invention, the work piece is machined by moving the hob mainly parallel to the rotation axis of the coupling half. As a result, the machining time can be very short, while at the same time a negative width curvature is formed which results from the radius of the hob.

The invention is explained below with reference to a drawing of an exemplary embodiment of the invention, in which:
Figure 1 shows a section through a changeable tooth coupling,
Figure 2 shows a side view of a face gear tooth of a coupling half,
Figure 3 shows a number of views of the face gear tooth in accordance with Figure 2,
Figure 4 shows a diagrammatic plan view of two coupling halves which are in full engagement with one another,
Figure 5 shows section V-V of Figure 4,
Figure 6 shows a diagrammatic plan view of two coupling halves which are partially in engagement with one another,
Figure 7 shows section VII-VII of Figure 6, and
Figure 8 shows a side view of a face gear tooth of a coupling half, which has a negative width curvature.

In the various figures, corresponding components are as far as possible always provided with the same reference numerals.

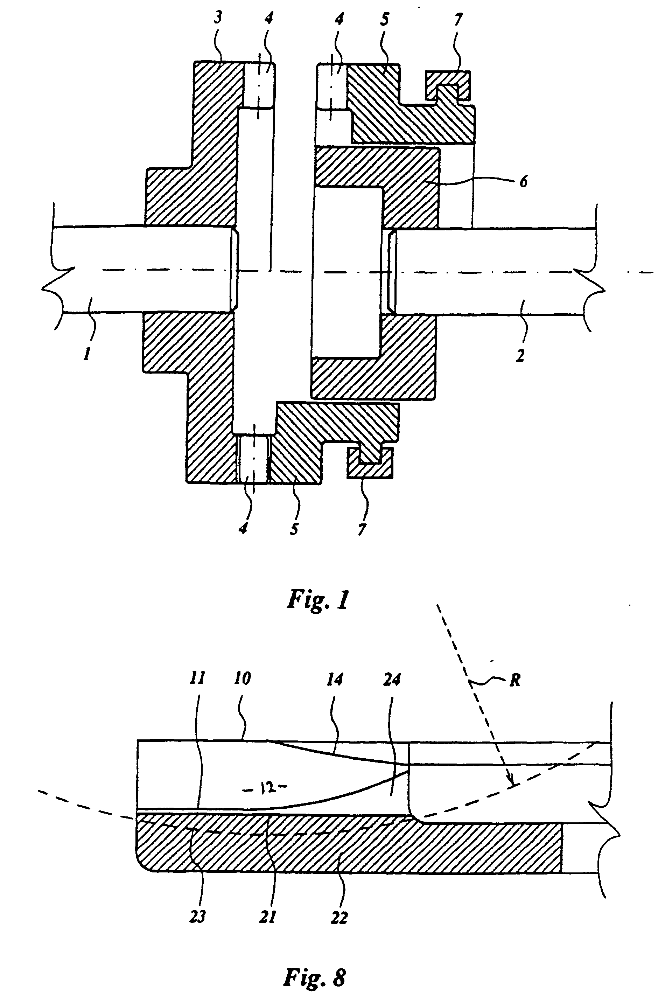

Figure 1 shows an embodiment of a changeable tooth coupling. A first coupling half 3 is arranged on a first shaft 1, and a second coupling half 5 can be shifted in the axial direction using a switching ring 7 attached to a body 6 which is attached to a second shaft 2. The first coupling half 3 and the second coupling half 5 are each provided with a coupling toothing 4 which mesh with one another and to this end have an identical number of teeth.

A tooth coupling of this kind, an example of which is shown here, is generally designed with a Hirth toothing, in which there are mechanically or electrically changeable couplings, as well as couplings in which the coupling halves 3 and 5 are pulled towards one another by means of bolts or are pressed against one another under spring loading, so that a protection against overloading is also achieved. In the example illustrated, the toothing 4 is at right angles to the axis of rotation of the tooth coupling, but designs are also known in which this angle differs from a right angle.

Couplings of this kind are used for coupling the rotation of the two shafts, and for centring the two shafts with respect to one another. To this end, it is important that the toothing of the coupling half be made accurately and that when the teeth are in full engagement with one another both flanks of all the teeth of one coupling half mesh with both flanks of all the teeth of the other coupling half.

In order to be able to satisfy the abovementioned requirements, according to the invention the toothing 4 is designed as a face gear toothing, that is to say a toothing which can interact with a cylindrical involute pinion. The shape of this toothing is completely defined by the geometry of the pinion from which the face gear toothing is derived. The face gear toothing may, for example, be produced using a hobbing process with a hob in accordance with EP-0,494,221, EP-0,559,798 or EP-0,330,289.

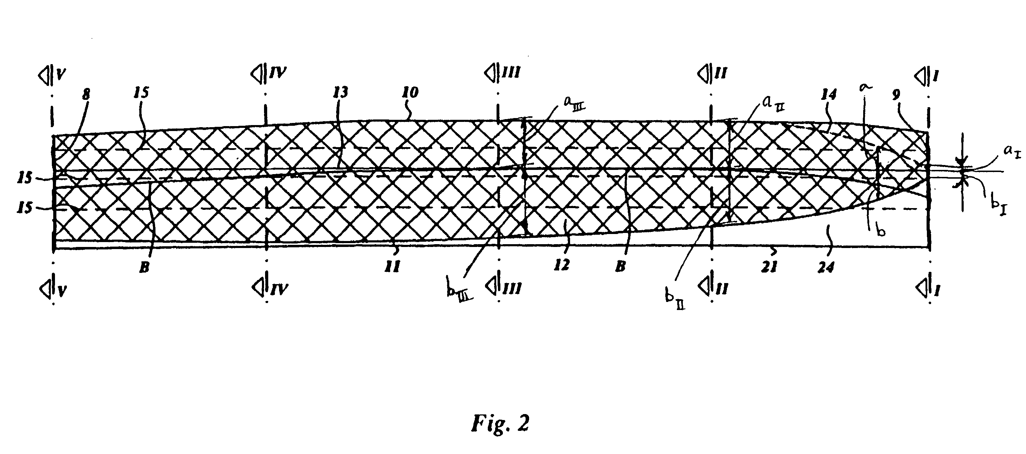

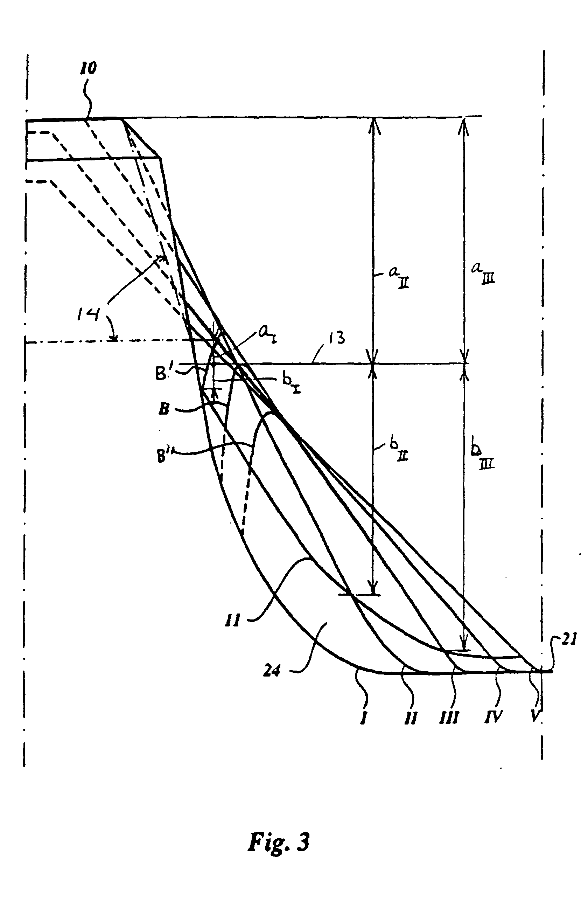

Figure 2 shows a side view of a face gear tooth, while Figure 3 shows the views I-V of the same tooth.

In Figure 2, 9 denotes the internal diameter of the toothing and 8 denotes the external diameter. The active tooth flank 12 (hatched in crossed lines) is dependent on the form of the involute tooth flank of the pinion from which the toothing is derived, and in Figure 2, 12 denotes the usual active tooth flank in the case of interaction between a pinion and a face gear. At the top, the active tooth flank 12 is delimited by a tooth tip 10, and at the bottom it is delimited by a transition 11 from the tooth flank to a root fillet 24. The root fillet 24 has a tooth root 21 as its deepest part, the depth of the tooth root 21 being defined primarily by the diameter of the pinion from which the toothing is derived and the shape of the tool used. Figure 2 also shows surface contour lines 15 which are at a constant distance from the tooth root 21.

Figure 3 shows the view and intersections with the planes I-V of the tooth of Figure 2, the changing angle of inclination of the tooth flank being visible; this figure shows that the shape of an intersection I-V of the active tooth flank 12 is a substantially straight line. A dividing plane which lies at an equal distance from the centre of a tooth and the centre of a tooth space and which is perpendicular to a plane through the tooth roots 21 intersects the active tooth flank 12 along a line B. The position of the flank with respect to the dividing plane can vary with the thickness of the face gear tooth, which is dependent on the geometry of the pinion, such as for example the W-dimension thereof. Depending on this W-dimension, the centre of tooth and tooth space can intersect the active tooth flank 12 along lines B, B' or B'', which can be calculated.

In Figures 2 and 3, the line of intersection between tooth flank 12 and the dividing plane is indicated by the line B, a central plane 13 parallel to a plane through the tooth roots 21 being shown, which central plane 13 is tangent on the highest point on line B. In this case, a is the distance between the central plane 13 and an adapted tooth tip 14, which is denoted by dot-dashed lines and is adapted in such a way that this distance a is less than the distance b from the central plane 13 to the transition 11 from the active tooth flank 12 to the root fillet 24. At the location of the cross-sections I, II and III, a and b are respectively denoted aI, bI; aII, bII and aIII, bIII. As a result of the adapted tooth tip 14, when the toothings of the two coupling halves are in full engagement with one another, the tooth tip 10 or 14 never comes into contact with the root fillet 24, thus precluding alignment errors and excessive pressures.

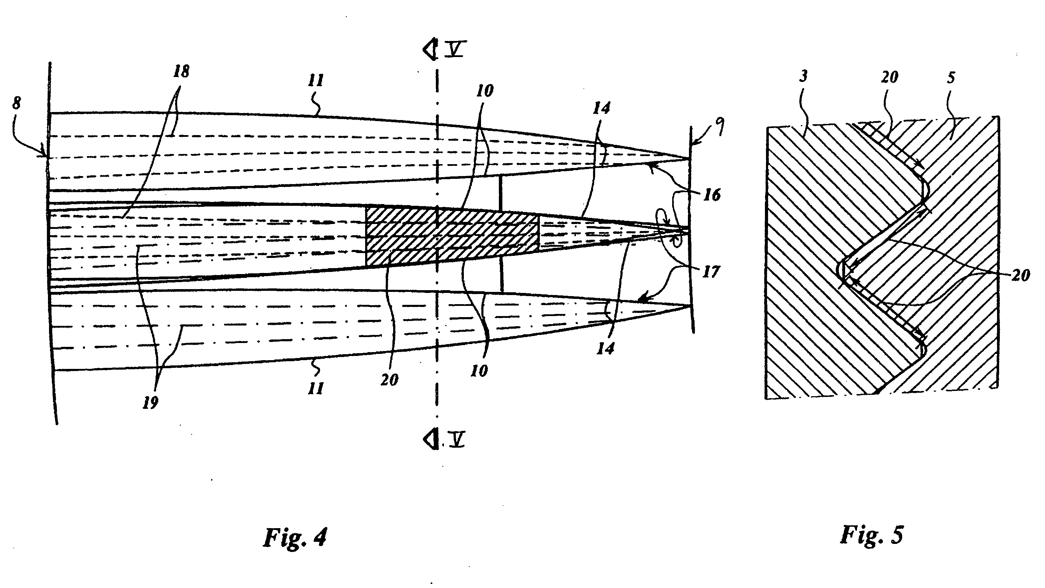

Figure 4 shows a plan view of the outlines of the active tooth flank portions 16 together with surface contour lines 18 of the first coupling half 3, as well as the outlines of the active tooth flank portions 17, together with surface contour lines 19 of the second coupling half 5. These outlines are delimited by the tooth tip 10 and in part tooth tip 14, the root fillet 11 and the external diameter 8. The two coupling halves mesh with one another in such a manner that both active tooth flank portions 16 of the first coupling half 3 are in contact with both active flank portions 17 of the second coupling half 5. Both tooth flanks 16 and 17 are in contact with one another for example in a contact region 20, and it is shown with the aid of the surface contour lines 18 and 19 that the surfaces are slightly rounded with a large radius of curvature and are in contact with one another over the full height. As a result of this large radius of curvature, there is always a low surface pressure, even if the coupling halves are rotated slightly with respect to one another, for example if they are not fully in engagement with one another. Figure 5 shows a cross-section of the meshing situation in accordance with Figure 4.

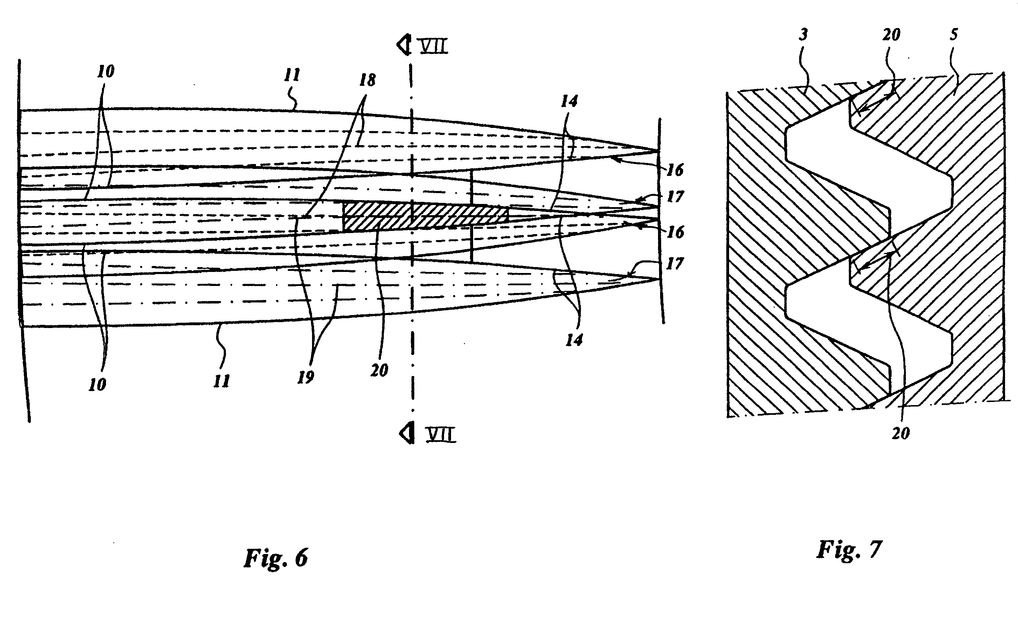

The plan view shown in Figure 6 corresponds to the plan view in accordance with Figure 4, except that the coupling halves 3 and 5 are not fully in engagement with one another, as shown in the cross-section in Figure 7. The contact region 20 is clearly less high. From the path of the surface contour lines 18 and 19 it can also be seen that in this situation a rounded tooth flank still always rests against a rounded tooth flank, with the result that the contact pressure remains as low as possible.

The contact pressure can be reduced further by selecting the geometry of the pinions from which the face gear toothing is derived, for example by selecting different numbers of teeth of the pinions associated with the different face gears and by optimally selecting the tooth profile displacements, numbers of teeth of the pinions and numbers of teeth of the face gears. As a result, it is possible to select the resulting radius of curvature, which in accordance with Hertz's theory is the sum of the radii of curvature of both active tooth flank portions 12, to be as large as possible, so that the surface pressure (Hertz pressure) occurring is as low as possible. It is also possible in this way to optimize the position of the contact region 20.

By designing the toothing of one or both coupling halves 3 and 5 with a negative width curvature, the radius of curvature, and hence the load-bearing capacity, can be increased still further. Figure 8 shows a coupling half 22 in which it is diagrammatically illustrated how the shape of the tooth root 21 can be adapted so that negative width curvature is produced in both tooth flanks of a tooth. In this case, the tooth root 21 is adapted to form a recessed tooth root 23 and the tooth flank 12 is adapted accordingly. If the coupling half is made using a hob having a radius R, this recessed tooth root 23 is produced if the hob is moved into the workpiece perpendicular to the toothing, a process which allows very short machining times. In addition, this machining can take place on a generally available universal gear cutting machine, since the movements of the hob correspond to the movements which are used when machining cylindrical gear wheels.

The width curvature which is produced as a result of the above-described method can be so strongly negative that the result could even be concave tooth flanks. This can be prevented by correctly selecting the geometry of the pinions and the numbers of teeth of the face gear toothing.

The coupling halves can be made by machining using a hob, as described above, but it is also possible to obtain the coupling toothing by non-cutting operations, such as forging, injection-moulding plastic, for example, or using powder metallurgy, in which case metal in powder form is compressed in a mould. The moulds which can be used for these processes are made using tools which have been machined in the manner described above. By machining in the manner described above, it is also possible to make an electrode with which the desired shape can be produced in the moulds using spark erosion.

## Claims

1. Tooth coupling for coupling the rotation of two shafts (1,2) having a common first axis of rotation, said tooth coupling comprising two coupling halves (3,5), each coupling half having a toothing facing the toothing of the other coupling half and being meshable therewith, the toothings of the coupling halves being face gear toothings and being determined by a cylindrical pinion with involute toothing rotatable around a second axis of rotation perpendicular to the first axis of rotation, each tooth of the toothing of a coupling half having a tooth tip (10,14) and a root fillet (24) and, at each side, an active tooth flank portion (12,16,17) delimited by the tooth tip and a transition line (11) to the root fillet, each tooth flank having a dividing plane, said dividing plane having at each radius, measured from the first axis of rotation of the toothing equal distances to the center of the tooth and the center of an adjoining tooth space, and being parallel to the first axis of rotation and intersecting the active tooth flank portion along an intersecting line (B), the toothing of each coupling half having a central plane (13) which is perpendicular to the first axis of rotation and which is tangent to the intersecting lines of the teeth, **characterised in that** at each radius the tooth tip (10, 14) of each tooth being shaped such that a first distance (a_{I}, a_{II}, a_{III}, ...) in a direction parallel to the first axis of rotation from the tooth tip to the central plane being smaller than a second distance (b_{I}, b_{II}, b_{III}, ...) in a direction parallel to the first axis of rotation between the central plane (13) and the transition line (11) to the root fillet (24) at said radius.

2. Tooth coupling according to claim 1, wherein the toothing (4) of at least one coupling half (3,5) is provided with a negative width curvature so that the radius of curvature of the intersecting line (B) is increased compared with the similar intersecting line of the active tooth flank determined by said cylindrical pinion.

3. Tooth coupling according to claim 1, wherein the geometry of the cylindrical pinions from which the face gear toothings of the coupling halves are derived is different.

4. Tooth coupling according to claim 3, wherein the cylindrical pinions, each of which determines the toothing of a coupling half, have a different number of teeth.

5. Tooth coupling of claim 1, wherein for the toothing of at least one coupling half, the distance from the central plane (13) to the centre of the root fillet in between the ends of a tooth is more than the similar distance at at least one of both ends of the rooth.

6. Tooth coupling according to claim 5, wherein the toothing of at least one coupling half includes a recessed tooth root the center of which has a curvature that equals a radius.

7. Method for making the face gear toothing for a coupling half (3,5) of a tooth coupling by machining the coupling half with a suitable hob in a gear cutting machine, **characterised in that** during machining the hob is moved mainly parallel to the rotation axis of the coupling half.

## Patentansprüche

1. Zahnkupplung zum Koppeln der Rotation zweier Wellen (1,2) mit einer gemeinsamen ersten Rotationsachse, wobei die Zahnkupplung zwei Kupplungshälften (3,5) umfasst und jede Kupplungshälfte eine Verzahnung aufweist, die der Verzahnung der anderen Kupplungshälfte gegenübersteht und mit ihr ineinander greifen kann und wobei die Verzahnungen der Kupplungshälften Stirnverzahnungen sind und von einem zylindrischen Ritzel mit Evolventenverzahnung, das um eine zweite Rotationsachse senkrecht zur ersten Rotationsachse drehbar ist, bestimmt werden, wobei jeder Zahn der Verzahnung einer Kupplungshälfte einen Zahnkopf (10, 14) und eine Fußrundung (24) und an jeder Seite einen wirksamen Zahnflankenteil (12,16,17) aufweist, der vom Zahnkopf und einer Übergangslinie (11) zur Fußrundung begrenzt wird, wobei jede Zahnflanke eine Teilungsebene aufweist, die an jedem Radius, von der ersten Rotationsachse der Verzahnung aus gemessen, gleiche Abstände zur Mitte des Zahns und zur Mitte einer benachbarten Zahnlücke hat und parallel zur ersten Rotationsachse verläuft und den wirksamen Zahnflankenteil entlang einer Schnittlinie (B) schneidet, und wobei die Verzahnung jeder Kupplungshälfte eine zentrale Ebene (13) hat, die senkrecht zur ersten Rotationsachse verläuft und die Schnittlinien der Zähne tangiert, **dadurch gekennzeichnet, dass** an jedem Radius der Zahnkopf (10,14) jedes Zahns so geformt ist, dass ein erster Abstand (a_{I}, a_{II}, a_{III}, ...) in einer Richtung parallel zur ersten Rotationsachse vom Zahnkopf zur zentralen Ebene kleiner ist als ein zweiter Abstand (b_{I}, b_{II}, b_{III}, ...) in einer Richtung parallel zur ersten Rotationsachse zwischen der zentralen Ebene (13) und der Übergangslinie (11) zur Fußrundung (24) an diesem Radius.

2. Zahnkupplung nach Anspruch 1, wobei die Verzahnung (4) von zumindest einer Kupplungshälfte (3,5) mit einer negativen Breitenkrümmung versehen ist, so dass der Krümmungsradius der Schnittlinie (B) gegenüber der ähnlichen Schnittlinie der vom zylindrischen Ritzel bestimmten wirksamen Zahnflanke vergrößert wird.

3. Zahnkupplung nach Anspruch 1, wobeidie Geometrie der zylindrischen Ritzel, von denen die Stirnverzahnungen der Kupplungshälften abgeleitet werden, verschieden ist.

4. Zahnkupplung nach Anspruch 3, wobeidie zylindrischen Ritzel, die jeweils die Verzahnung einer Kupplungshälfte bestimmen, eine unterschiedliche Anzahl von Zähnen aufweisen.

5. Zahnkupplung nach Anspruch 1, wobeifür die Verzahnung von zumindest einer Kupplungshälfte der Abstand von der zentralen Ebene (13) zur Mitte der Fußrundung zwischen den Enden eines Zahns größer ist als der ähnliche Abstand an zumindest einem von beiden Enden des Zahns.

6. Zahnkupplung nach Anspruch 5, wobeidie Verzahnung von zumindest einer Kupplungshälfte einen unterschnittenen Zahnfuß aufweist, dessen Mitte eine Krümmung hat, die einem Radius entspricht.

7. Methode zur Herstellung der Stirnverzahnung für eine Kupplungshälfte (3,5) einer Zahnkupplung durch Bearbeitung der Kupplungshälfte mit einem geeigneten Wälzfräser in einer Verzahnungsmaschine, **dadurch gekennzeichnet, dass** der Wälzfräser bei der Bearbeitung hauptsächlich parallel zur Rotationsachse der Kupplungshälfte bewegt wird.

## Revendications

1. Engrenage à dents pour coupler la rotation de deux arbres (1, 2) ayant un premier axe de rotation commun, ledit engrenage comprenant deux demi - engrenages (3, 5), chaque demi - engrenage ayant une denture faisant face à la denture de l'autre demi - engrenage et pouvant s'engrener avec lui, les dentures des demi - engrenages étant des dentures de roue de champ et étant déterminées par un pignon cylindrique avec denture à développante pouvant tourner autour d'un second axe de rotation perpendiculaire au premier axe de rotation, chaque dent de la denture d'un demi - engrenage ayant un sommet de dent (10, 14) et un arrondi de pied de dent (24) et, de chaque côté, une partie de flanc de dent active (12, 16, 17) délimitée par le sommet de dent et une ligne de transition (11 ) vers l'arrondi de pied de dent, chaque flanc de dent ayant un plan de séparation, ledit plan de séparation ayant à chaque rayon, mesuré à partir du premier axe de rotation de la denture des distances égales au centre de la dent et au centre d'un espace entre dents contiguës, et étant parallèle au premier axe de rotation et croisant la partie de flanc de dent active le long d'une ligne d'intersection (B), la denture de chaque demi - engrenage ayant un plan central (13) qui est perpendiculaire au premier axe de rotation et lequel est tangent aux lignes d'intersection des dents, **caractérisé en ce qu'**à chaque rayon le sommet de dent (10, 14) de chaque dent est agencé de sorte qu'une première distance (a_{I}, a_{II}, a_{III}, ...) selon une direction parallèle au premier axe de rotation à partir du sommet de dent jusqu'au plan central est plus petite qu'une seconde distance (b_{I}, b_{II}, b_{III}, ...) selon une direction parallèle au premier axe de rotation entre le plan central (13) et la ligne de transition (11) vers l'arrondi de pied de dent (24) au dit rayon.

2. Engrenage à dents selon la revendication 1, dans lequel la denture (4) d'au moins un demi - engrenage (3, 5) est établie avec une courbure en largeur négative de sorte que le rayon de courbure de la ligne d'intersection (B) est augmenté en comparaison avec la ligne d'intersection similaire du flanc de dent actif déterminé par ledit pignon cylindrique.

3. Engrenage à dents selon la revendication 1, dans lequel la géométrie des pignons cylindriques à partir de laquelle les dentures de roue de champ des demi - engrenages sont dérivées est différente.

4. Engrenage à dents selon la revendication 3, dans lequel les pignons cylindriques, chacun desquels détermine la denture d'un demi -engrenage, ont un nombre différent de dents.

5. Engrenage à dents selon la revendication 1, dans lequel pour la denture d'au moins un demi - engrenage, la distance à partir du plan central (13) jusqu'au centre de l'arrondi de pied de dent entre les extrémités d'une dent est supérieure à la distance similaire à au moins une des deux extrémités de la dent.

6. Engrenage à dents selon la revendication 5, dans lequel la denture d'au moins un demi - engrenage comprend un pied de dent enfoncé dont le centre a une courbure qui est égale à un rayon.

7. Méthode pour fabriquer la denture de roue de champ pour un demi - engrenage (3,5) d'un engrenage à dents en usinant le demi - engrenage avec une fraise mère appropriée dans une machine de coupe d'engrenage, **caractérisée en ce que** pendant l'usinage la fraise - mère est déplacée principalement parallèlement à l'axe de rotation du demi -engrenage.
